(19) **Europäisches Patentamt European Patent Office Office européen des brevets**

(11) **EP 4 011 053 B1**

(12) **EUROPEAN PATENT SPECIFICATION**

(45) Date of publication and mention
of the grant of the patent:
**30.08.2023 Bulletin 2023/35**

(21) Application number: **20740316.3**

(22) Date of filing: **16.07.2020**

(51) International Patent Classification (IPC):
**H04W 12/122** (2021.01)    **H04W 12/02** (2009.01)
**H04L 9/40** (2022.01)    **H04B 7/06** (2006.01)

(52) Cooperative Patent Classification (CPC):
**H04W 12/122; H04B 7/0617; H04L 63/1475; H04W 12/02**

(86) International application number:
**PCT/EP2020/070190**

(87) International publication number:
**WO 2021/023494 (11.02.2021 Gazette 2021/06)**

(54) **COMMUNICATION DEVICES AND METHODS FOR SECURE COMMUNICATION**

KOMMUNIKATIONSVORRICHTUNGEN UND VERFAHREN FÜR SICHERE KOMMUNIKATION

DISPOSITIFS DE COMMUNICATION ET PROCÉDÉS POUR UNE COMMUNICATION SÉCURISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2019 EP 19189955**

(43) Date of publication of application:
**15.06.2022 Bulletin 2022/24**

(73) Proprietors:
• **Sony Group Corporation**
  **Tokyo 108-0075 (JP)**
• **Sony Europe B.V.**
  **Weybridge, Surrey KT13 0XW (GB)**
  Designated Contracting States:
  **AL**

(72) Inventors:
• **FELLHAUER, Felix**
  **70569 Stuttgart (DE)**
• **ARNOLD, Maximilian**
  **70569 Stuttgart (DE)**
• **TIEDEMANN, Stephen**
  **70327 Stuttgart (DE)**
• **CIOCHINA, Dana**
  **70327 Stuttgart (DE)**
• **HANDTE, Thomas**
  **70327 Stuttgart (DE)**
• **LOGHIN, Nabil Sven**
  **70327 Stuttgart (DE)**

(74) Representative: **Witte, Weller & Partner Patentanwälte mbB Postfach 10 54 62 70047 Stuttgart (DE)**

(56) References cited:
**EP-A2- 3 427 400    WO-A1-2018/078124
US-A1- 2013 210 345    US-A1- 2013 267 163
US-A1- 2018 152 229**

EP 4 011 053 B1

**Description**

BACKGROUND

FIELD OF THE DISCLOSURE

The present disclosure relates to a first and second communication device for use in a wireless communication system to communicate with each other in a secure manner. The present disclosure relates further to corresponding communication methods.

DESCRIPTION OF RELATED ART

Secure messaging between an information sender and an intended recipient is one of the fundamental challenges in communication systems. In order to not let information pass to an unintended recipient (an adversary or eavesdropper), care must be taken to control the environment and/or cryptographically secure the information so that only the intended recipient is able to understand the information transmitted. Cryptographic approaches usually operate on upper layers of the transmission protocol. Once the signal is intercepted on a lower layer, such as PHY layer (over the medium, such as RF waves), brute force decryption may be possible, especially when the packet lengths and encryption keys are relatively short. This is especially true for Internet of Things (IOT) applications, in which typically only a few bits or bytes may be transmitted. Thus, PHY layer security has been considered as an additional means to protect the signal already on PHY layer.

In a wireless communication system all participants (hereinafter also called communication devices) share the same communication medium and are able to listen (or eavesdrop) on any communication within receive range. According to conventional approaches, information that shall not be shared with all potential recipients might be encrypted using keys exclusively known to the sender and receiver. The standard way to establish those keys is to derive them from a pre-shared secret (also known as the network password) given to legitimate participants for association with the network. Unless further measures are taken, all participants are then able to decrypt information from any other participant that is part of the network. To mitigate the problem of potential "eavesdropping" of sensitive information, concepts for Point-to-Point encryption for such networks exist. Nevertheless, an exchange of an encryption key is required to establish a secure communication link. A common solution is implemented in the Extensible Authentication Protocol (EAP) which is used in the context of IEEE 802.11 wireless LANs to exchange keys. The handshake procedure that takes place in the set-up phase of such a secure connection still is sensitive, and if it is eavesdropped or manipulated all subsequent communication can be decrypted and captured by a potential eavesdropper.

WO 2018/078124 A1 discloses a communication device for RF-based communication with another communication device that comprises an antenna circuitry configured to transmit and receive RF signals and beamforming circuitry configured to perform beamforming and to control the antenna circuitry in a beamforming training phase to transmit and/or receive RF signals using one or more selected directive beams. The beamforming circuitry is configured to perform beamforming training by controlling the antenna circuitry i) to transmit data using at least one first directive transmit beam, wherein the other communication device is configured to listen using a first directive receive beam, said data including a second transmit beam information, and ii) to subsequently listen using a predetermined second directive receive beam for a response from the other communication device, which is configured to transmit, if the data transmitted in step i) have been received, a response using a second directive transmit beam indicated by the second transmit beam information.

The patent document EP3427400 B1 discloses embodiments of a communication system that generally comprises an initiator (e.g. an access point), one or more responders (e.g. stations, such as a smartphone, laptop, etc.) and one or more beamforming devices 30. When the initiator 10 and a responder 20 seek to communicate with each other (uni-directionally or bi-directionally) the optimal (in the sense of throughput and signal quality) beamforming, i.e. the optimal antenna beam combination of the antenna beam used by the initiator 10 and the responder 20, shall be found. This process of finding the optimal analog beamforming with low computational complexity and in a short time is addressed in this disclosure.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly nor impliedly admitted as prior art against the present disclosure.

SUMMARY

It is an object to provide communication devices that prevent or at least make it more difficult that a potential eavesdropper can actually eavesdrop on the communication between a first communication device and a second communication device. It is a further object to provide corresponding communication methods as well as a corresponding computer program for implementing said communication methods.

According to different aspects of the present invention there are provided a first communication device and a second communication device for use in a wireless communication system as well as a first communication method and a second communication method as defined in the claims.

According to a still further aspect a computer program comprising program means for causing a computer to carry out the steps of the method disclosed herein, when said computer program is carried out on a computeris provided.

Embodiments are defined in the dependent claims. It shall be understood that the disclosed second communication device, the disclosed communication methods and the disclosed computer program have similar and/or identical further embodiments as the claimed communication devices and as defined in the dependent claims and/or disclosed herein.

In contrast to wired networks, where all network participants are (quasi-) statically connected to the medium, wireless communication systems broadcast their message to everyone in a certain proximity. To mitigate this, wireless communication networks provide the option to exploit spatial properties like directivity. Additionally, the wireless medium and its properties are dependent on multiple parameters like position and orientation of devices, time, etc. According to the present disclosure one or more of these properties are used in order to increase security of the exchange of information between a first and second communication device and thus to decrease the probability of eavesdropping by a third communication device (i.e., a potential eavesdropper) in a wireless communication system (such as a wireless LAN network), especially in the 60 GHz (or mmWave) frequency spectrum.

For this purpose, a security criterion that is directed to reducing (or even minimizing) the probability that a third communication device can eavesdrop on the communication between the first communication device and the second communication device is used. A reduction of the eavesdrop probability may thus lead to a minimization of this probability, but may also be a tradeoff between useful rate/SNR and eavesdrop probability. Further, communication means to optimize this security criterion are provided. In one embodiment, the first and second communication devices select one or more antenna beam combinations (i.e., one or more combinations of an antenna beam used by the first communication device and an antenna beam used by the second communication device) that have been trained before in a beamforming training, which are then used for securely transmitting and receiving information. A sender and a receiver thus may utilize PHY layer spatial diversity and multi-array antenna configurations to prevent a malicious third party from potentially eavesdropping communication between the legitimate sender and receiver.

Embodiments are defined in the dependent claims. It shall be understood that the disclosed second communication device, the disclosed communication methods, the disclosed computer program and the disclosed computer-readable recording medium have similar and/or identical further embodiments as the claimed communication devices and as defined in the dependent claims and/or disclosed herein.

In contrast to wired networks, where all network participants are (quasi-) statically connected to the medium, wireless communication systems broadcast their message to everyone in a certain proximity. To mitigate this, wireless communication networks provide the option to exploit spatial properties like directivity. Additionally, the wireless medium and its properties are dependent on multiple parameters like position and orientation of devices, time, etc. According to the present disclosure one or more of these properties are used in order to increase security of the exchange of information between a first and second communication device and thus to decrease the probability of eavesdropping by a third communication device (i.e., a potential eavesdropper) in a wireless communication system (such as a wireless LAN network), especially in the 60 GHz (or mmWave) frequency spectrum.

For this purpose, a security criterion that is directed to reducing (or even minimizing) the probability that a third communication device can eavesdrop on the communication between the first communication device and the second communication device is used. A reduction of the eavesdrop probability may thus lead to a minimization of this probability, but may also be a tradeoff between useful rate/SNR and eavesdrop probability. Further, communication means to optimize this security criterion are provided. In one embodiment, the first and second communication devices select one or more antenna beam combinations (i.e., one or more combinations of an antenna beam used by the first communication device and an antenna beam used by the second communication device) that have been trained before in a beamforming training, which are then used for securely transmitting and receiving information. A sender and a receiver thus may utilize PHY layer spatial diversity and multi-array antenna configurations to prevent a malicious third party from potentially eavesdropping communication between the legitimate sender and receiver.

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

Fig. 1    shows a diagram illustrating the secrecy rate as function of the receiver's SNR and an eavesdropper's SNR.

Fig. 2    shows a diagram illustrating the coded modulation secrecy rate for 4-QAM over receiver SNR and different receiver SNR values at the eavesdropper.

Fig. 3    shows a diagram illustrating the coded modulation secrecy rate for a coupled system with different attenuation factor, describing the SNR offset between receiver and eavesdropper, for different modulation schemes.

Fig. 4    shows diagrams illustrating a first embodiment for increasing security of messaging by transmit power reduction.

Fig. 5    shows diagrams illustrating a second embodiment for increasing security of messaging by spatial hopping.

Fig. 6    shows diagrams illustrating a third embodiment for increasing security of messaging by spatial jamming.

Fig. 7    shows a diagram illustrating a fifth embodiment for increasing security of messaging by use of position information and splitting the message.

Fig. 8    shows a diagram illustrating a sixth embodiment for increasing security of messaging by transmit power reduction and beamforming and transmit power reduction.

Fig. 9    shows a diagram illustrating a seventh embodiment for increasing security of messaging by transmit power.

Fig. 10    shows a diagram illustrating an eighth embodiment for increasing security of messaging in an indoor scenario.

Fig. 11    shows a schematic diagram of a communication system according to the present disclosure.

Fig. 12    shows a schematic diagram of the configuration of a first and second communication device according to an embodiment of the present disclosure.

DETAILED DESCRIPTION OF THE EMBODIMENTS

In conventional communication systems a single transmitter and a single receiver is observed. The typical metric to characterize the upper bound of communication throughput of these systems is the Shannon capacity, measured in bit per second per Hertz or bit per channel use [bpcu]. The Shannon capacity (assuming an additive white Gaussian noise channel model (AWGN)) can be determined based on the received signal to noise ratio (SNR) according to:

$$C = \log_2\left(1 + \frac{S}{N}\right)$$

with signal power S, and noise power N. The signal to noise ratio (S/N) in such a system is usually (in linear systems) proportional to the transmit power $P_{TX}$. Usually, a communication system is designed in a way that C is maximized, assuming a single information source A and a single information sink B are involved.

Assuming that another information sink E exists (also called "wire-tapper" or "Eve" for "eavesdropper") that can eavesdrop the signals transmitted by A, this can be considered as a secrecy system. In order to quantify the secrecy of the system, a commonly known metric is the so called secrecy rate (SR) $C^S$ that is defined as the difference between achievable rate of "A to B" and achievable rate of "A to E":

$$C^{\mathrm{S}} = C\left(SNR_A\right) - C\left(SNR_E\right)$$

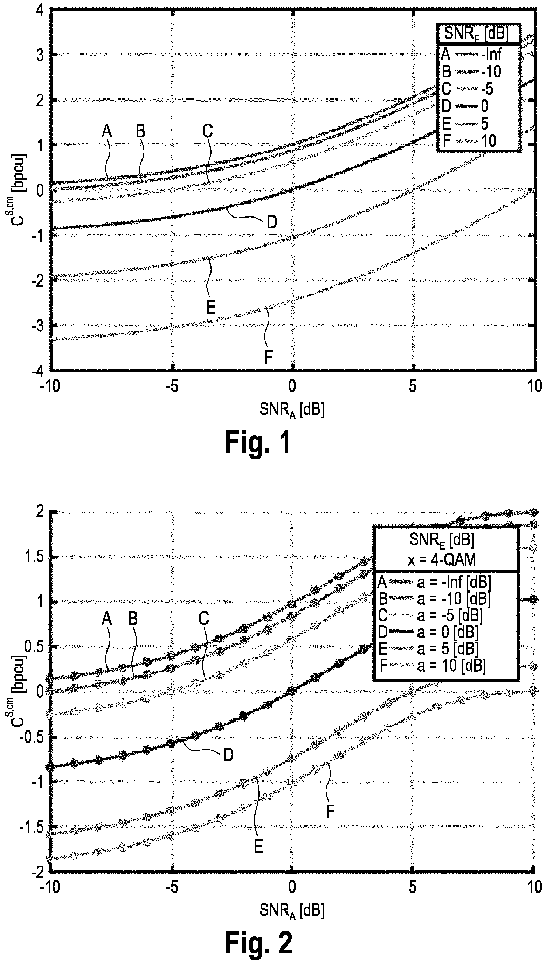

A simple visualization of this relation is shown in Fig. 1. It is obvious, that the best secrecy rate can be achieved, if $SNR_A \gg SNR_E$. It is obvious, that $C^S$ can even become negative, in situations, where $SNR_E > SNR_A$, which is also the case in parts of Fig. 1.

In practical communication systems, the full Shannon capacity can never be reached (limited A/D resolution, finite complexity, ...) and thus the secrecy rate shown in Fig. 1 can be seen as an upper bound. A more realistic metric is the coded modulation (CM) capacity, that assumes a AWGN channel, discrete-valued input, a continuous-valued output and a modulation scheme, that is used to map binary information to symbols. For a uniform input distribution and the signal constellation alphabet $\chi$ with $m$ bit per symbol ($M$-ary constellation with $M = 2^m$), the CM capacity between channel input $X$ and output $Y$ can be expressed by:

$$C_\chi^{\mathrm{cm}} = E\left[ \log_2 \frac{P_{Y|X}(Y|X)}{1/2^m \sum_{x' \in \chi} P_{Y|X}(Y|x')} \right],$$

with E[.] being the expectation operator. Based on the CM capacity, a more realistic CM secrecy rate can be defined that is visualized for a 4-QAM constellation in Fig. 2. According to this capacity definition, a more realistic secrecy rate based on the coded modulation capacity can be defined:

$$C^{\mathrm{S,cm}} = C^{\mathrm{cm}}(SNR_A) - C^{\mathrm{cm}}(SNR_E)$$

Another, even more realistic metric, that can be used to define the secrecy rate is the bit interleaved coded modulation (BICM) capacity. This metric is taking into account additional practical limitations of communication systems and can be used in analogy to the previously defined definitions.

$$C^{\mathrm{S,bicm}} = C^{\mathrm{bicm}}(SNR_A) - C^{\mathrm{bicm}}(SNR_E)$$

Still it is obvious that the highest CM secrecy rate can be achieved when $SNR_A$ is high and $SNR_E$ is low. But in contrast to the secrecy rate shown in Fig. 1 it can be seen that CM secrecy rate behaves asymptotically with respect to both SNR parameters, thus limiting the curves to [$-m, +m$].

In a typical scenario, the SNR of A and E are not independent, but both proportional to the transmit power that is used by A. Thus a coupled CM secrecy rate can be defined by introducing an attenuation factor a, defining the SNR-offset between A and E:

$$SNR_A|_{\mathrm{dB}} = P_{TX}|_{\mathrm{dBm}} - P_L|_{\mathrm{dB}} - P_{N,A}\big|_{\mathrm{dBm}}$$

$$SNR_E|_{\mathrm{dB}} = SNR_A|_{\mathrm{dB}} + a|_{\mathrm{dB}}$$

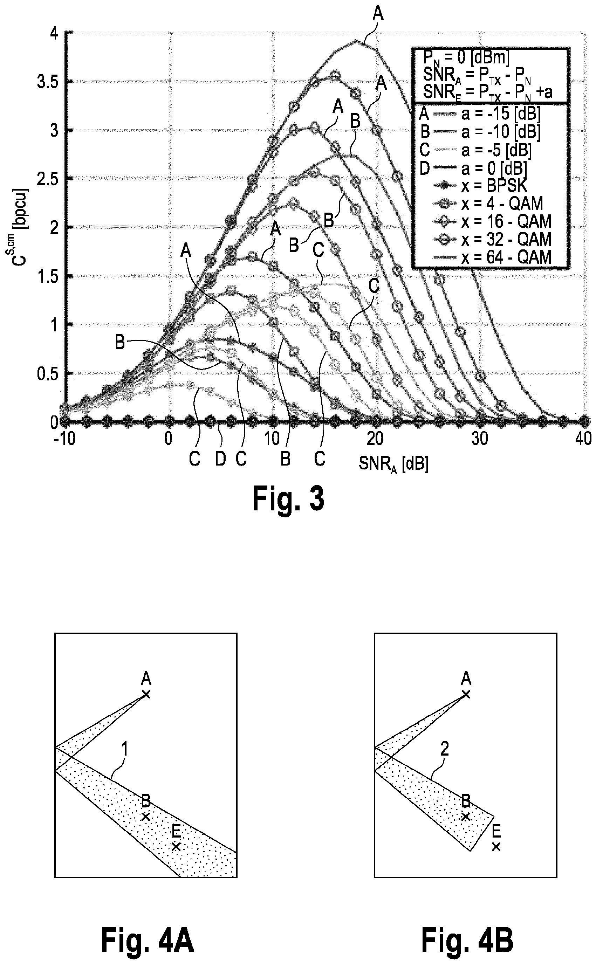

with transmit power $P_{TX}$, path loss $P_L$ noise power at A/E $P_{N,A/E}$ and attenuation factor a. It shall be noted that $P_{RX}|_{\mathrm{dBm}} = P_{TX}|_{\mathrm{dBm}} - P_L|_{\mathrm{dB}}$ defines the received signal power taking into account the path loss $P_L|_{\mathrm{dB}}$, which can be treated as a constant offset and is thus not further considered in the context of this disclosure. Thus, for simplicity it is assumed: $P_L|_{\mathrm{dB}} = \mathbf{0dB.}$ Using this definition, it can be shown that there exists an optimum $P_{TX}$ for each combination of a and $\chi$ that maximizes $C^{S,cm}$. This relation is visualized for an explanatory set of $\chi$ and a in Fig. 3.

Thus, for a secure communication system, an optimization goal can be defined in order to provide the highest possible CM secrecy rate:

$$\max\{C^{\mathrm{S,cm}}(P_{TX}, \chi, a)\}$$

Additionally, it might be considered to maximize the above mentioned metric under the additional constraint of a specific minimal communication rate / capacity $C_{\mathrm{target}}$, resulting in the following constrained optimization problem:

$$\max \ \{C^{\mathrm{S,cm}}(P_{TX}, \chi, a)\} \text{ with } C^{\mathrm{cm,A}}(P_{TX}, \chi, a) \geq C_{\mathrm{target}}$$

Another formulation might target minimization of the eavesdroppers rate/capacity:

$$\min\{C^{\mathrm{cm,E}}(P_{TX}, \chi, a)\} \text{ with } C^{\mathrm{cm,A}}(P_{TX}, \chi, a) \geq C_{\mathrm{target}}$$

In order to reach this goal several approaches will be described in the following that aim to influence the three parameters $P_{TX}$, $\chi$ and *a* specifically for mmWave communication systems.

The above introduced metric for secrecy provides one option regarding the problem of providing secrecy in a communication system. Other optional metrics are listed in the following:

- Bit Error Rate (BER): BER observed by a potential eavesdropper shall be maximized (i.e. should be close to 0.5, which implies that half of the received bits are faulty).
- Packet Error Rate (PER): PER observed by a potential eavesdropper shall be as high as possible (i.e. close to 1, which implies that none of the received packets can be decoded successfully)
- Signal-to-Noise-Ratio difference ($\mu$): SNR of a signal sent by the first communication device (transmitter A), observed at the second communication device (dedicated receiver B) shall be as high as possible, compared to the SNR observed at the potential eavesdropper E. $\mu = SNR_{AB}|_{dB} - SNR_{AE}|_{dB}$
- The amount of information that is transmitted from A to B shall be maximized or reach at least a certain threshold, while the confusion of B shall be maximized.

Besides the above mentioned information theoretic aspects on security, in implementations of communication systems, data is usually protected by Forward Error Correcting Codes (FECs) in order to make the transmission more robust against effects of noise or interference. These codes are usually designed in order to minimize the probability of bit errors in the received message (bit error rate (BER)) for a given SNR or SNR range (or channel conditions in general). Designing these codes with respect of maximizing the above mentioned metrics is another approach to enhance physical layer security.

Based on the introduced secrecy metric, the present disclosure describes multiple methods by which a station (STA) and access point (AP) can utilize spatial diversity to prevent other stations within the same network sharing the same cryptographic secret to eavesdrop communication between the station and the access point. The same method may also be used for direct communication between two stations or in other communications systems, besides WLAN.

High frequency wireless communication such as 60 GHz WLAN is, use directional wave radiation (beams) between the transmitter (TX) and receiver (RX) to cover even medium distances because omnidirectional radiation patterns as used for lower frequencies are subject to strong attenuation. Hence, two communication partners, such as a STA and AP, use beamforming antenna configurations that are learned (or trained) initially and continuously updated to changing conditions such as displacement or blockage. Intuitively, the best communication path between both parties would be the transmit and receive-beams directed on a straight line towards each other (line of sight, LOS). However, in typical situations there will additionally be reflections that form indirect paths between the sender and receiver, and it may as well be that the direct path is not the best performing due to materials to be penetrated. But in any case, if communication is at all possible, there is an ensemble of beam configurations that, if some or all of them are used together, provides the potential of a spatially diverse communication method. It can be shown that if using a sufficient number of reflective path components there is little to zero potential for a eavesdropper device to be in a position where it is able to receive the same complete superposition of sub-streams as the legitimate receiver, simply because it cannot be in the same position where all sub-streams are decodable into the full information set.

The following embodiments of the present disclosure might be applied either separately or in combination in order to enhance the secrecy of a communication system. As overall goal it can be formulated that the embodiments are directed to reducing (or even minimizing) eavesdrop probability and preferably optimizing (or even maximizing) the secrecy rate SR.

While for classical beamforming in the mmWave domain it is an objective for A and B to find a single, adequate combination of transmit and receive beams for the purpose of point-to-point communication or (in case of beamforming for position determination) for the purpose of accurate fine timing measurement (FTM, which is used to estimate the distance between a sender and a receiver), according to the present disclosure it is an objective for A and B to:

- test beams and/or beam combinations;
- evaluate the tested beams based on one of the previously defined metrics (BER, PER, SR, CMSR, BICMSR, ...);
- select a beam combination or a sequence or superposition of beams that allow A and B to exchange a predetermined amount of information while minimizing the probability of eavesdropping; and/or
- transmit and receive information using the previously selected beam or combination of beams or sequence of beams.

For instance, secrecy rate may be considered as a metric, in which case the security criterion shall be maximized (which may be formulated as max. of {Secrecy Rate / CM SR / BICM SR} min of {abs(bit error rate at eavesdropper-0.5)}) such that the probability of eavesdropping by a third device is minimized. Other forms of security metric / criteria that can be used, such as max of {packet/frame error rate at eavesdropper} or max of {outage probability at eavesdropper}.

As shown in Fig. 3, essentially three parameters $P_{TX}$, $\chi$ and $a$ can be used in order to influence the CM SR of a communication system. In the context of a mmWave communication system that uses phased array antennas (PAAs) to focus transmit signal power and receive sensitivity in space (so called beams), the beams to be used are selected during a beam forming (also called training or learning) procedure. Based on the selected beam and the scenario (room and position of devices) the attenuation factora is directly affected by the beam forming procedure.

In order to maximize the secrecy rate, A (also called "first communication device") and B (also called "second communication device") can negotiate a constellation $\chi$ and a reduction of $P_{TX}$ such that the received message can be decoded by B, which increases the secrecy rate. $\chi$ may be selected such that the constellation provides the highest possible order $M$, which maximizes the SR as can be seen in Fig. 3. As another option a non-uniform constellation might be selected that was previously optimized to provide maximum secrecy for a specific set of parameters. In the situation shown in Fig. 4A A is transmitting its message with a high transmit power and an antenna beam that reflects the signal on a wall, allowing B and E (also called "third communication device" or "eavesdropper") to successfully decode the message. In the situation shown in Fig. 4B A is transmitting with reduced transmit power so that E is not able to decode the message successfully. In the areas 1 (in Fig. 4A) and 2 (in Fig. 4B) the received signal power is sufficient in order to successfully decode the message.

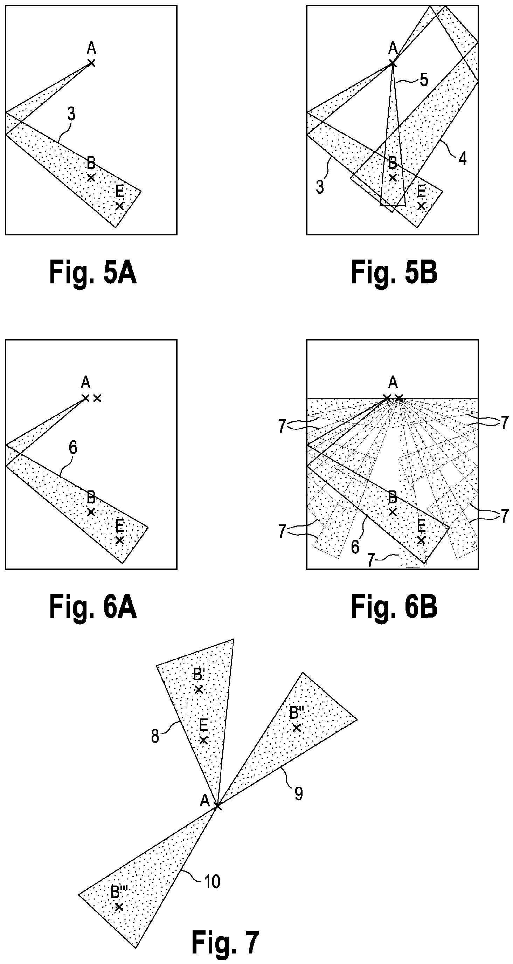

Fig. 5 illustrates the basic concept of the embodiment of spatial hoping in different time slots in the context of a mmWave communication system. In the situation shown in Fig. 5A A sending its message via a single path 3, allowing B and E to decode the complete message. In the situation shown in Fig. 5B A is sending its message by splitting up the message into several message portions, each transmitted in a different direction, using independent reflections allowing E to decode only a single portion of the message. Thus, in this embodiment the transmitter uses two independent reflection paths 3 and 4 and the direct path 5 for transmitting one third of the message via each path.

These message portions may be transmitted via the different paths using different orthogonal dimensions. For instance, the message portions may be transmitted in different time slots, different frequency bands or subcarriers, different spreading sequences, different polarizations, etc. As only the message period transmitted via the path 1 can be decoded by the eavesdropper E, a reconstruction of the complete message is not possible. This can be straightforwardly extended to N paths, further minimizing the proportion of information bits an arbitrarily placed eavesdropper is able to reconstruct, resulting in a high secrecy rate between A and B.

Fig. 5 only indicates beamforming at the transmitter side, which might be sufficient for some applications. In practical applications, beamforming may be performed on both sides. Therefore, a beamforming training procedure may be performed initially in order to identify beams that focus reflections. Then, both devices may agree on a sequence, defining the beam indices or directions to be used to transmit and receive in conjunction with respective changeover times. After this negotiation phase, the actual message transmission can be initiated.

To inform the receiver of the selected beams the transmitter A may transmit selection information to the receiver B, the selection information indicating the selected one or more antenna beam combinations and the order of their use. As an alternative, the receiver B may derive the use of the antenna beam combinations via known properties of both devices (e.g. their MAC address) or in another way (e.g. by using a unique sequence known to both devices or a prior message transmission).

Besides the method described above, where beamforming is changed in order to transmit information via different reflections using different orthogonal dimensions (e.g. different time slots), an alternative implementation might use a special beamforming configuration that leverages spatial diversity of the channel such that the plurality of the indicated paths is used at the same time. This might be applicable especially for large antenna arrays (many antennas), which allows to form beams that consolidate properties of multiple beamformer configurations at the same time.

In another embodiment (linear or non-linear) combinations of message portions of a message may be transmitted using the methods described above to avoid decoding of portions of the message if the eavesdropper can decode a message portion (e.g. WiFi frames).

Another embodiment how to direct a given radio frequency (RF) power from A to B, while ensuring that other locations (A to E) obtain a lower power, may apply parabolic phase shifter settings at the PAA. Conventionally, linear phases are used, where the gradient of the linear phases relates to the angle of departure (AOD). The beam can then be steered into a desired direction. If E is intercepting the signal between A and B, i.e., if the path from A to E is shorter than from A to B, a negative secrecy rate may occur. However, with quadratic phase shifter settings (so called parabolic beamforming), not only the direction of the beam can be controlled, but also its focal point If the distance from A to B is known, e.g. via some distance measurement (e.g. by a time of flight by FTM (fine time measurement) procedure), the focal point can be set accordingly. Even if the path from A to E is shorter than from A to B, the captured power at E may be lower than at the focal point B.

More generally, parabolic or non-linear phase-shifting beamforming may be used by A for communicating with B to control the focal point of the one or more antenna beams onto the position of B or to control the one or more antenna beams into a single direction. Hence, beamforming with single beam (i.e., linear antenna weights) may be used to focus the radiated / received power in a single direction or beamforming with non-linear antenna weights may be used to focus the radiated / received power onto a single point in space.

In the following further embodiments exploiting spatial hopping, either subsequent hopping or simultaneously transmitting the different hops (into different spatial directions), will be described.

One embodiment uses network coding according to which several subsequent signals / packets, which should be transmitted from A to B are combined prior to transmission, e.g., via a linear combination. For instance, if message portion P1, P2, P3 are to be transmitted at three time instances or using other orthogonal dimensions, in an embodiment the combinations 2*P1+3*P2+5*P3, then 1*P1+2*P2+4*P3, and then 7*P1+4*P2+1*P3 are transmitted. At the receiver B, these three superimposed messages are captured, then decomposed (e.g. by matrix inversion) to the original packets P1, P2, P3). If an eavesdropper E captures a few of the transmitted packets, it cannot compute (without brute-force attacks) the original packets. Only the complete set of transmitted packets, which may only cumulate at the receiver B, does allow so.

Another embodiment uses partial transmission in-phase (I) and quadrature-phase (Q). For instance, half of the spatial beams, which can be used for A to B communication, may carry the I component of a QAM constellation, while the other half may carry only the Q component. Thus, instead of using quadrature amplitude constellations, only (single or partial side-band) real-valued signals may be transmitted per selected beam. Alternatively, the unused component could carry the information of other packets (from other time instances). Alternatively, the beams carrying the I component and the beams carrying the Q component could be transmitted simultaneously. The I and Q signals could be transmitted with such a phase difference that only in focal point B the signals superimpose to a conventional QAM constellation (I and Q having 90° phase difference). In other locations, the signals may even cancel each other out most of the time.

Another embodiment uses spatial jamming approaches, which controls another parameter that influences the secrecy metric defined above. It focuses on decreasing $SNR_E|_{dB}$ by increasing the received noise (or interference by jamming) power of E $P_{N,E}|_{dBm}$, while $SNR_A|_{dB}$ remains as high as possible:

$$SNR_A|_{dB} = P_{TX}|_{dBm} - P_L|_{dB} - P_{N,A}|_{dBm}$$

$$SNR_E|_{dB} = P_{TX}|_{dBm} - P_L|_{dB} - P_{N,E}|_{dBm} + a|_{dB}$$

This can be reached by transmitting spatially focused artificial noise (ideally Gaussian distributed) using a separate PAA at A, while transmitting the actual message as visualized in Fig. 6. It is assumed, that a beamforming training sequence has been carried out in between A and B (thus, both have knowledge about potential reflections that allow communication) and the position of E is unknown.

Then A transmits an artificial noise signal while transmitting the message to B via one of the paths. As it is not known by A which beam actually effects E's SNR, A switches its noise transmit beams recurrently, but is leaving out those that would influence B's SNR. Alternatively, all other beams can be used for jamming, if the induced ("collateral") interference level from A to B can be estimated and proper transmit power adjustment can be applied. For instance, as shown in Fig. 6B, A is jamming towards the (unknown) position of E, and thereby increases the noise + (collateral) interference level also at B. While the additional (collateral) interference at B reduces its SNR, the effect may be more detrimental to a potential eavesdropper E. Reliable communication may require adjusting (increasing) the transmit power.

In more detail, according to Fig. 6A A is sending its message using a single RF chain of a H-MIMO (hybrid MIMO) configuration via a single path 6. According to Fig. 6B A is using an additional RF chain (indicated as a second cross "x" in the figure) to send artificial noise into different directions using different beams 7, preferably at different points in time (excluding those beams that would influence B's SNR), thus effectively disrupting E during reception of parts of the message, preventing E from decoding the full message. The region covered by the path 6 indicates the area with sufficient signal power to decode the message. The regions covered by the paths 7 indicate areas affected by artificial noise.

In another embodiment full duplex jamming is applied according to which jamming signals are transmitted by A, using one of its RF chains, receiving signals with another RF chain, while B is sending actual information in a communication session, e.g. in an uplink (UL) operation. Vice versa, if A transmits to B in a downlink (DL) operation, a full duplex device B could receive the transmitted information, while transmitting jamming information into other directions. A combination is also possible, where both A and B perform jamming, while communicating, leaving out the intended path (A to B, with / without reflections) that are not jammed to avoid self-jamming of the intended paths.

According to embodiments of the present disclosure, to take effect of the above mentioned security criterion, the ratio between received power of the information signal and the power of noise observed at the potential eavesdropper can be controlled. Besides controlling transmit power, the sender or receiver of confidential information can influence the power of noise at the potential eavesdropper. This can be done by sending signals with artificial noise or (pseudo-) random signal sequences either on transmitter side or receiver side. Hereby, "noise" shall be understood broadly as any kind of jamming signal.

In general, one or more beam parameters (such as transmit power and/or antenna weight) of the one or more antenna beams used for transmitting the noise signals may be controlled by A such that interference at B is minimized and/or signal-to-interference-plus-noise ratio (SNIR) at B is maximized.

The embodiments described above assume that the position and orientation of A, B and E are unknown to A and E, that knowledge about the dedicated channel (A to B) is only known to A and B, and that there is no a priori knowledge about channel properties and potential locations of E. Any a priori knowledge about one or more of these parameters might be used to improve these embodiments. An example to illustrate three potential use cases is that A wants to transmit its secret information (e.g. position information) x to B', B", or B''', which are distributed antennas of B (those antennas can represent e.g. a network of base stations or distributed antennas of an access point); E wants to eavesdrop this information; and A has knowledge about its own location and knowledge about locations of B's distributed antennas.

One embodiment to transmit the secret message with a minimized eavesdropping probability is illustrated in Fig. 7. A splits its message x into three (or more) parts $x_{1...3}$ and transmits them via three (or more) different spatial beams 8, 9 and 10 to B', B" and B''', respectively. Thus, E can intercept only $x_2$ and is thus not able to reconstruct the message. This embodiment thus represents an extension of spatial hopping: instead of using reflections, now direct links are used, and reflectors are replaced by distributed AP antenna arrays.

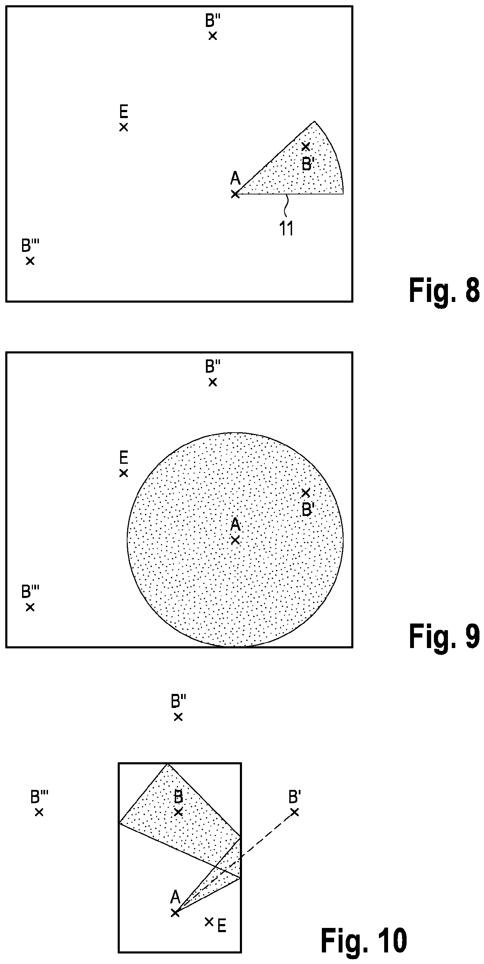

Another embodiment to transmit the secret message with a minimized eavesdropping probability is illustrated in Fig. 8. A determines one instance of B by means of a selection criterion like minimal distance, minimal covered area where an eavesdropper can be located, and/or maximal separation to a known eavesdropper location. Then, A uses a beam 11 into B's direction (in this example into the direction of the antenna B") with minimal required transmit power so that B" can receive the message.

Still another embodiment to transmit the secret message with a minimized eavesdropping probability is illustrated in Fig. 9, assuming A is not capable of beamforming. A determines the closest antenna of B, which is B' in this example, and uses the minimal required transmit power, e.g. derived based on Euclidean distance and a respective path loss model.

The prior information about involved participants might be provided by any or multiple of the following options:

- Database or mapping information (e.g. locations of B (or B'... B'''), if B is a cellular network)
- Probabilities or histograms that picture the probabilities of participants position based on past transmissions, floorplans, geometric information, distance or channel information that can be extracted from received signals
- Position information (absolute and/or relative) that is provisioned by the participants itself, e.g. GPS information or results of triangulation / trilateration (more generic multi-angulation, multi-lateration) based on time of flight information or angular measurements
- Image processing of camera information
- RADAR / LIDAR
- Pedestrian dead reckoning (PDR) via motion sensors
- Combinations of the above

The above mentioned embodiments are also applicable in the context of multi-hop networks. In such scenarios the secret information may be fed forward across multiple combinations of transmitter and receiver. Conceptually, each hop can be represented as a configuration like the ones explained above, where the initial receiver B becomes a transmitter A for the next hop. As secrecy and therefore minimization of eavesdropping probability may be provided across all hops from the initial transmitter to the final receiver, the proposed methods can be applied across all hops.

To indicate generalized applicability of the disclosed embodiments an indoor scenario is illustrated in Fig. 10 that shows an Access Point (AP) A surrounded by reflectors (walls). Images (aliases) of B that can be observed by A are indicated with B', ... , B'''. These aliases can conceptually be treated like multiple base stations (BS) in a cellular communication system or a receiver with multiple spatially separated antennas. This figure also shows the equivalence of a reflective and multi base station scenario.

In an implementation that provides one of the above mentioned secret communication modes besides regular communication modes (also called normal modes where the rate between A and B, or - in multi user scenarios - the rates between A and B, C, ... are maximized) a selection function may be implemented that allows to switch between both modes as required.

According to embodiments of the present disclosure, to take effect of the above mentioned security criterion, the ratio between received power of the information signal and the power of noise observed at the potential eavesdropper can be controlled. Besides controlling transmit power, the sender or receiver of confidential information can influence the power of noise at the potential eavesdropper. This can be done by sending signals with artificial noise or (pseudo-) random signal sequences either on transmitter side or receiver side. Hereby, "noise" shall be understood broadly as any kind of jamming signal.

Antenna weights in terms of beamforming in the context of this disclosure describe how the signals of multiple subantennas of the same antenna array are modfied before superposition in receive operation and how those signals are modified before radiation via multiple subantennas in transmit operation, respectively. In the mmWave domain this modification is typically implemented with arrays of phase shifters that allow adjusting the phase of each subantennas' signal. Typically, those phase shifter settings (also named antenna weight vectors) are linearly dependent on the position of respective subantennas (either in one dimension, in case of a uniform linear array (ULA) or in two dimensions in case of an uniform rectangular array (URA)) to synthesize planar wavefronts. Thus, they are called linear antenna weight vectors or linear phase shifter settings. In general, it is also possible to use non-linear phase shifter settings (e.g. parabolic) that allow adjusting the focus of radiated/received power not only into a certain direction but also into a certain point in space. Generally, any phase shifter setting can be applied, even if it has no direct physical interpretation like linear or parabolic.

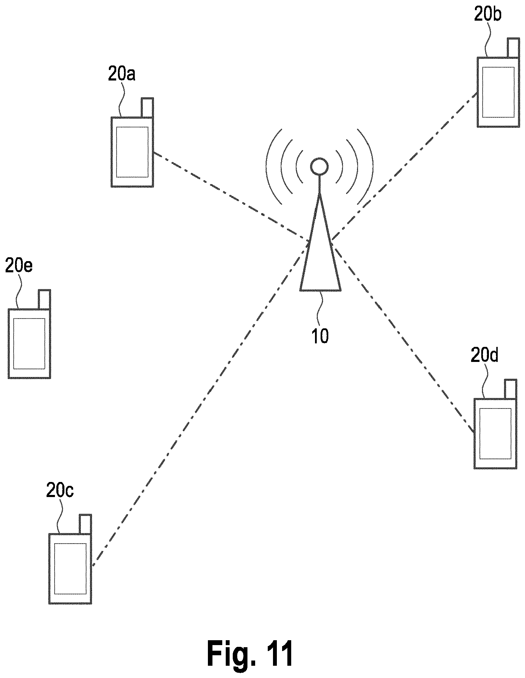

Fig. 11 shows a schematic diagram of communication system according to an exemplary (non-limiting) embodiment of the present disclosure. The communication system is configured with a first communication device 10 and one or more second communication devices 20. Each of the first and second communication devices 10 and 20 has a wireless communication function. Particularly, the first communication device 10 has a multi-user communication function of transmitting frames to one or more second communication devices 20. Further, the first communication device 10 operates as an access point (AP) and the second communication devices 20 operate as a station (STA). For this reason, in the communication system, multi-user communication from the AP 10 to a plurality of STAs 20 can be performed, i.e. the first communication device 10 may be able to simultaneously communicate with a group of two or more second communication devices 20 using MU-MIMO communication. Communication from the AP 10 to the STA 20 is referred to as downlink (DL) and communication from the STA 20 to the AP 10 is referred to as uplink (UL).

To enable MIMO communication, the AP 10 may be equipped with multiple antennas and multiple RF chains, allowing it to transmit multiple streams simultaneously to multiple STAs 20. Each STA 20 device may have multiple antennas and multiple RF chains to simultaneously receive multiple streams from the AP 10 or simultaneously transmit multiple streams to the AP 10.

For example, as illustrated in Fig. 11, the communication system may be configured with the AP 10 and a plurality of STAs 20a to 20d. The AP 10 and the STAs 20a to 20d are associated to each other via wireless communication and perform transmission and reception of frames directly with each other. Another STA 20e might not be part of the logical network (not associated to AP 10). For example, the AP 10 is a communication device conforming to IEEE 802.11 and transmits a SU PPDU (single user downlink protocol data unit) or (MU (multi user) PPDU) to a legitimate receiver STA 20a (or multiple legitimate receivers). In this situation all other STAs in proximity might be potential eavesdroppers.

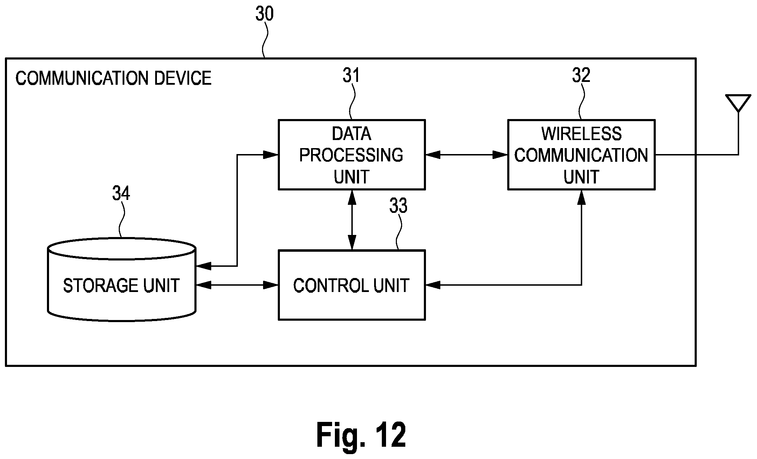

Fig. 12 shows a schematic diagram of the configuration of a communication device 30 according to an embodiment of the present disclosure. Generally, each of the AP 10 and the STAs 20a to 20e may be configured as shown in Fig. 12 and may include a data processing unit 31, a wireless communication unit 32, a control unit 33, and a storage unit 34.

As a part of a communication device 30, the data processing unit 31 performs a process on data for transmission and reception. Specifically, the data processing unit 31 generates a frame on the basis of data from a higher layer of the communication device 30, and provides the generated frame to the wireless communication unit 32. For example, the data processing unit 31 generates a frame (in particular a MAC frame) from the data by performing processes such as fragmentation, segmentation, aggregation, addition of a MAC header for media access control (MAC), addition of an error detection code, or the like. In addition, the data processing unit 31 extracts data from the received frame, and provides the extracted data to the higher layer of the communication device 30. For example, the data processing unit 31 acquires data by analyzing a MAC header and performing a reorder process, or the like with regard to the received frame.

The wireless communication unit 32 has a signal processing function, a wireless interface function, and the like as part of a communication unit. Further, a beamforming function is provided. This unit generates and sends PHY layer packets (or, in particular for a WLAN standard, PHY layer protocol data units (PPDU)), which have the physical representation of electric waveforms that can be radiated from one or multiple antennas and propagate in space.

The signal processing function is a function of performing signal processing such as modulation on frames. Specifically, the wireless communication unit 32 performs encoding, interleaving, and modulation on the frame provided from the data processing unit31 in accordance with a coding and modulation scheme set by the control unit33, adds a preamble and a PHY header, and generates a PHY layer packet. Further, the wireless communication unit 32 recovers a frame by performing demodulation, decoding, and the like on the PHY layer packet obtained by a process of the wireless interface function, and provides the obtained frame to the data processing unit 31 or the control unit 33.

The wireless interface function is a function to transmit/receive a signal via one or more antennas. Specifically, the wireless communication unit 32 converts a signal related to the symbol stream obtained through the process performed by the signal processing function into an analog signal, amplifies the signal, filters the signal, and up-converts the frequency (modulates the signal). Next, the wireless communication unit 32 transmits the processed signal via the antenna. In addition, on the signal obtained via the antenna, the wireless communication unit 32 performs a process that is opposite to the process at the time of signal transmission such as down-conversion of frequency (demodulation of the signal) or digital signal conversion.

The beamforming function performs analog beamforming and/or digital beamforming, including beamforming training, as will be explained below in more detail.

As a part of the communication unit, the control unit 33 (e.g., station management entity (SME)) controls entire operation of the communication device 30. Specifically, the control unit 33 performs a process such as exchange of information between functions, setting of communication parameters, or scheduling of frames (or packets) in the data processing unit 31.

The storage unit 34 stores information to be used for process to be performed by the data processing unit 31 or the control unit 33. Specifically, the storage unit 34 stores information stored in a transmission frame, information acquired from a receiving frame, information on a communication parameter, or the like.

In an alternative embodiment, the first and second communication devices, in particular each of the AP 10 and the STAs 20, may be configured by use of circuitry that implements the units shown in Fig. 12 and the functions to be carried out. The circuitry may e.g. be realized by a programmed processor. Generally, the functionalities of first and second communication devices and the units of the communication device 30 shown in Fig. 12 may be implemented in software, hardware or a mix of software and hardware.

All of the above described embodiments to achieve physical layer security are based on the assumption that there is no information available at A or B about position or channel state information (CSI) from A to E or E to A. Any amount of a priori information can be leveraged by A or A and E to further enhance the achievable secrecy. Therefore, the following optional methods may be applied in order to come into possession of such a priori information:

- knowledge about geometry of a scenario;
- knowledge of statistics of positions, received signal power, used beams / precoders, channel state information (e.g. an access point that keeps track about such information of its assigned stations) which allows for assessment of parameters for a potential eavesdropper; and/or
- information of other assigned or unassigned stations that might be in close proximity to the access point.

The disclosed solution is well suited to be adopted by further products according to the standard draft IEEE 802.1 1ay or amendments thereof, because i) it leverages the mmWave and in particular Hybrid MIMO concepts that is required for those products and ii) applications might be found in distribution networks use cases, where confidential data of many users is transported via nodes in public spaces or internet access use cases in public spaces like hotel lobbies or cafes, as well as internet of things (IOT) use cases that require physical layer security either because constraints like computational complexity or power consumption prohibit application of conventional cryptographic methods. Further, the disclosed techniques are advantageous when the signals rather than the payload information need to be protected (which is the case for conventional cryptography).

An example is transmission of the position of tracking devices. When a device A transmits its position information to a base station B, it can encrypt the position information, but when sending the encrypted message, A discloses its position (from the transmitted waveform itself). Hence, a potential eavesdropper that receives the encrypted signal at multiple positions, can triangulate A's position.

Thus, the foregoing discussion discloses and describes merely exemplary embodiments of the present disclosure. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article A or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors, which are programmed or configured according to software code. A circuit does not include pure software, although a circuit includes the above-described hardware executing software. A circuit or circuitry may be implemented by a single device or unit or multiple devices or units, or chipset(s), or processor(s).

**Claims**

1. A first communication device (A) for use in a wireless communication system configured with the first communication device (10) and a second communication device (20) to communicate with the second communication device (B), the first communication device comprising circuitry configured to

   - perform beamforming training with the second communication device to train a plurality of antenna beam combinations of antenna beams used by the first and second communication devices for transmitting and/or receiving signals,
   - select one or more of the trained antenna beam combinations, and
   - communicate with the second communication device using the selected one or more antenna beam combinations,

   whereby the circuitry is configured to select the one or more of the trained antenna beam combinations according to a security criterion that is directed to reducing the probability that a third communication (E) device can eavesdrop on the communication between the first communication device and the second communication device.

2. The first communication device (A) according to claim 1,
   wherein the circuitry is configured to select one or more of the trained antenna beam combinations that optimize the security criterion, in particular by maximization of a secrecy rate and/or maximization of the probability of transmission errors at the third communication device.

3. The first communication device (A) according to claim 1 or 2,
   wherein the circuitry is configured to select a plurality of the trained antenna beam combinations wherein

   i) the circuitry is configured to use them simultaneously for communicating with the second communication device and/or
   ii) the circuitry is configured to use them in different orthogonal dimensions for communicating with the second communication device, and /or
   iii) the trained antenna beam combinations are using different communication paths between the first and second communication devices, and/or
   iv) the circuitry is configured to split a message to be transmitted to the second communication device into a plurality of message portions and to transmit the message portions via different antenna beams or different antenna beam sets of the selected antenna beam combinations.

4. The first communication device (A) according to any one of the preceding claims, wherein the circuitry is configured to transmit selection information to the second communication device, the selection information indicating the selected one or more antenna beam combinations and the order of their use, and/or to transmit one or more message portions that are transmitted to one or more instances of the second communication device using one or more antenna beams having a minimal required beam width and/or a minimal required transmit power.

5. The first communication device (A) according to any one of the preceding claims, wherein the circuitry is configured to perform parabolic linear or non-linear phase-shifting beamforming for communicating with the second communication device to control the focal point of the one or more antenna beams onto the position of the second communication device or to control the one or more antenna beams into a single direction.

6. The first communication device (A) according to any one of the preceding claims, wherein the circuitry is configured to split a message to be transmitted to the second communication device into a plurality of message portions, to form two or more different combinations of the message portions and to transmit the two or more different combinations of the message portions in different orthogonal dimensions and/or via different antenna beams of the selected antenna beam combinations.

7. The first communication device (A) according to any one of the preceding claims, wherein the circuitry is configured to modulate signals to be transmitted onto modulated complex-valued signals, each having an in-phase component and a quadrature-phase component and to transmit the these components of a modulated signal in different orthogonal dimensions and/or via different antenna beams of the selected antenna beam combinations.

8. The first communication device (A) according to any one of the preceding claims, wherein the circuitry is configured to transmit noise signals using one or more antenna beams of antenna beam combinations not selected for communication between the first communication device and the second communication device, in particular to recurrently change the one or more antenna beams used for transmitting the noise signals and/or to control the transmit power and/or beam parameters of the one or more antenna beams used for transmitting the noise signals such that interference at the second communication device is minimized and/or signal-to-interference-plus-noise ratio at the second communication device is maximized, and/or to transmit the noise signals while simultaneously transmitting or receiving messages using one or more antenna beams of the selected antenna beam combinations for communication between the first communication device and the second communication device.

9. The first communication device (A) according to any one of the preceding claims, wherein the second communication device comprises two or more distributed antennas, and
wherein the circuitry is configured to receive position information indicating the position of the two or more distributed antennas of the second communication device and to transmit message portions of a message to the two or more distributed antennas using different antenna beams of the selected antenna beam configurations and/or to transmit a message to the one or more of the distributed antennas of the second communication device having minimal distance to the first communication device.

10. The first communication device (A) according to any one of the preceding claims, wherein the circuitry is configured to transmit signals using beams selected for transmission using provided absolute and/or relative position information about position of the one or more instances of the second communication device and/or its distributed antennas

   - from one or more of a database, a position sensor, and a radar sensor, and/or
   - by evaluating prior communication, floorplans, geometric information, distance information, channel information, time of flight information, and/or angular measurements, and/or
   - by dead reckoning and/or
   - by building a statistical model based on historic information.

11. A second communication device (B) for use in a wireless communication system configured with a first communication device (10) and the second communication device (20) to communicate with the first communication device (A), the second communication device comprising circuitry configured to

   - take part in beamforming training with the first communication device to train a plurality of antenna beam combinations of antenna beams used by the first communication device for transmitting and/or receiving signals,
   - receive selection information indicating one or more of the trained antenna beam combinations selected according to a security criterion that is directed to minimizing the probability that a third communication device can eavesdrop on the communication between the first communication device and the second communication device, and
   - communicate with the first communication device using the selected one or more antenna beam combinations.

12. The second communication device (B) according to claim 11,
wherein the circuitry is configured to

   - perform beamforming training with the first communication device to train a plurality of antenna beam combinations of antenna beams used by the first communication device for transmitting and/or receiving signals and
   - feed back beam quality information to the first communication device.

13. A communication method of a first communication device (A) for use in a wireless communication system configured with the first communication device (10) and a second communication device (20) to communicate with the second communication device (B), the communication method comprising

   - performing beamforming training with the second communication device to train a plurality of antenna beam combinations of antenna beams used by the first and second communication devices for transmitting and/or receiving signals,
- selecting one or more of the trained antenna beam combinations, and
- communicating with the second communication device using the selected one or more antenna beam combinations,

whereby the one or more of the trained antenna beam combinations are selected according to a security criterion that is directed to reducing the probability that a third communication (E) device can eavesdrop on the communication between the first communication device and the second communication device.

14. A communication method of a second communication device (B) for use in a wireless communication system configured with a first communication device (10) and the second communication device (20) to communicate with the first communication device (A), the communication method comprising

- taking part in beamforming training with the first communication device to train a plurality of antenna beam combinations of antenna beams used by the first communication device for transmitting and/or receiving signals,
- receiving selection information indicating one or more of the trained antenna beam combinations selected according to a security criterion that is directed to reducing the probability that a third communication device (E) can eavesdrop on the communication between the first communication device and the second communication device, and
- communicating with the first communication device using the selected one or more antenna beam combinations.

15. A computer program comprising program code means for causing a computer to perform the steps of said method according to claim 13 or 14 when said computer program is carried out on a computer.

**Patentansprüche**

1. Erstes Kommunikationsgerät (A) zur Verwendung in einem drahtlosen Kommunikationssystem, das mit dem ersten Kommunikationsgerät (10) und einem zweiten Kommunikationsgerät (20) konfiguriert ist, um mit dem zweiten Kommunikationsgerät (B) zu kommunizieren, wobei das erste Kommunikationsgerät eine Schaltung umfasst, die für Folgendes konfiguriert ist:

- Durchführen von Strahlformungstraining mit dem zweiten Kommunikationsgerät, um eine Vielzahl von Antennenstrahlkombinationen von Antennenstrahlen zu trainieren, die von dem ersten und zweiten Kommunikationsgerät zum Senden und/oder Empfangen von Signalen verwendet werden,
- Auswählen einer oder mehrerer der trainierten Antennenstrahlkombinationen, und
- Kommunizieren mit dem zweiten Kommunikationsgerät über die ausgewählte(n) Antennenstrahlkombination(en),

wobei die Schaltung so konfiguriert ist, dass sie die eine oder mehrere der trainierten Antennenstrahlkombinationen gemäß einem Sicherheitskriterium auswählt, das darauf ausgerichtet ist, die Wahrscheinlichkeit zu verringern, dass ein drittes Kommunikationsgerät (E) die Kommunikation zwischen dem ersten Kommunikationsgerät und dem zweiten Kommunikationsgerät abhören kann.

2. Erstes Kommunikationsgerät (A) nach Anspruch 1,
wobei die Schaltung so konfiguriert ist, dass sie eine oder mehrere der trainierten Antennenstrahlkombinationen auswählt, die das Sicherheitskriterium optimieren, insbesondere durch Maximierung einer Geheimhaltungsrate und/oder Maximierung der Wahrscheinlichkeit von Übertragungsfehlern am dritten Kommunikationsgerät.

3. Erstes Kommunikationsgerät (A) gemäß Anspruch 1 oder 2,
wobei die Schaltung so konfiguriert ist, dass sie eine Vielzahl der trainierten Antennenstrahlkombinationen auswählt, wobei

i) die Schaltung so konfiguriert ist, dass sie sie gleichzeitig für die Kommunikation mit dem zweiten Kommunikationsgerät verwendet und/oder
ii) die Schaltung so konfiguriert ist, dass sie sie in verschiedenen orthogonalen Dimensionen für die Kommunikation mit dem zweiten Kommunikationsgerät verwendet, und/oder
iii) die trainierten Antennenstrahlkombinationen unterschiedliche Kommunikationspfade zwischen dem ersten und dem zweiten Kommunikationsgerät verwenden, und/oder

iv) die Schaltung ist so konfiguriert, dass sie eine an das zweite Kommunikationsgerät zu übertragende Nachricht in eine Vielzahl von Nachrichtenteilen aufteilt und die Nachrichtenteile über verschiedene Antennenstrahlen oder verschiedene Antennenstrahlensätze der ausgewählten Antennenstrahlenkombinationen überträgt.

4. Erstes Kommunikationsgerät (A) nach einem der vorhergehenden Ansprüche,
wobei die Schaltung so konfiguriert ist, dass sie Auswahlinformationen an das zweite Kommunikationsgerät überträgt, wobei die Auswahlinformationen die ausgewählte(n) eine(n) oder mehrere Antennenstrahlkombination(en) und die Reihenfolge ihrer Verwendung angeben, und/oder dass sie einen oder mehrere Nachrichtenteile überträgt, die an eine oder mehrere Instanzen des zweiten Kommunikationsgeräts unter Verwendung eines oder mehrerer Antennenstrahlen mit einer minimal erforderlichen Strahlbreite und/oder einer minimal erforderlichen Sendeleistung übertragen werden.

5. Erstes Kommunikationsgerät (A) nach einem der vorhergehenden Ansprüche,
wobei die Schaltung so konfiguriert ist, dass sie parabolische lineare oder nichtlineare phasenverschiebende Strahlformung für die Kommunikation mit dem zweiten Kommunikationsgerät durchführt, um den Brennpunkt des einen oder der mehreren Antennenstrahlen auf die Position des zweiten Kommunikationsgeräts zu steuern oder um den einen oder die mehreren Antennenstrahlen in eine einzige Richtung zu steuern.

6. Erstes Kommunikationsgerät (A) nach einem der vorhergehenden Ansprüche,
wobei die Schaltung so konfiguriert ist, dass sie eine an das zweite Kommunikationsgerät zu übertragende Nachricht in eine Vielzahl von Nachrichtenteilen aufteilt, zwei oder mehr verschiedene Kombinationen der Nachrichtenteile bildet und die zwei oder mehr verschiedenen Kombinationen der Nachrichtenteile in verschiedenen orthogonalen Dimensionen und/oder über verschiedene Antennenstrahlen der ausgewählten Antennenstrahlkombinationen überträgt.

7. Erstes Kommunikationsgerät (A) nach einem der vorhergehenden Ansprüche,
wobei die Schaltung so konfiguriert ist, dass sie zu übertragende Signale auf modulierte komplexwertige Signale moduliert, die jeweils eine Gleichphasenkomponente und eine Quadraturhasenkomponente aufweisen, und dass sie diese Komponenten eines modulierten Signals in verschiedenen orthogonalen Dimensionen und/oder über verschiedene Antennenstrahlen der ausgewählten Antennenstrahlkombinationen überträgt.

8. Erstes Kommunikationsgerät (A) nach einem der vorhergehenden Ansprüche,
wobei die Schaltung konfiguriert ist, um Rauschsignale unter Verwendung eines oder mehrerer Antennenstrahlen von Antennenstrahlkombinationen, die nicht für die Kommunikation zwischen dem ersten Kommunikationsgerät und dem zweiten Kommunikationsgerät ausgewählt sind, zu übertragen, insbesondere um den einen oder die mehreren Antennenstrahlen, die für die Übertragung der Rauschsignale verwendet werden, wiederholt zu ändern und/oder die Sendeleistung und/oder Strahlparameter des einen oder der mehreren Antennenstrahlen, die für die Übertragung der Rauschsignale verwendet werden, so zu steuern, dass die Interferenz an dem zweiten Kommunikationsgerät minimiert wird und/oder das Signal-zu-Interferenz-plus-Rausch-Verhältnis an dem zweiten Kommunikationsgerät maximiert wird, und/oder um die Rauschsignale zu übertragen, während gleichzeitig Nachrichten unter Verwendung eines oder mehrerer Antennenstrahlen der ausgewählten Antennenstrahlkombinationen für die Kommunikation zwischen dem ersten Kommunikationsgerät und dem zweiten Kommunikationsgerät gesendet oder empfangen werden.

9. Erstes Kommunikationsgerät (A) nach einem der vorhergehenden Ansprüche,

wobei das zweite Kommunikationsgerät zwei oder mehr verteilte Antennen umfasst, und

wobei die Schaltung so konfiguriert ist, dass sie Positionsinformationen empfängt, die die Position der zwei oder mehr verteilten Antennen des zweiten Kommunikationsgeräts anzeigen, und dass sie Nachrichtenteile einer Nachricht an die zwei oder mehr verteilten Antennen unter Verwendung unterschiedlicher Antennenstrahlen der ausgewählten Antennenstrahlkonfigurationen sendet und/oder eine Nachricht an die eine oder mehrere der verteilten Antennen des zweiten Kommunikationsgeräts sendet, die einen minimalen Abstand zum ersten Kommunikationsgerät haben.

10. Erstes Kommunikationsgerät (A) nach einem der vorhergehenden Ansprüche,
wobei die Schaltung so konfiguriert ist, dass sie Signale unter Verwendung von Strahlen sendet, die für die Übertragung unter Verwendung von bereitgestellten absoluten und/oder relativen Positionsinformationen über die Position der einen oder mehreren Instanzen des zweiten Kommunikationsgeräts und/oder seiner verteilten Antennen ausgewählt werden

- aus einer oder mehreren Datenbanken, einem Positionssensor und einem Radarsensor, und/oder
- durch Auswertung früherer Kommunikation, Grundrisse, geometrischer Informationen, Entfernungsinformationen, Kanalinformationen, Flugzeitinformationen und/oder Winkelmessungen, und/oder
- nach dem Zufallsprinzip und/oder
- durch den Aufbau eines statistischen Modells auf der Grundlage historischer Informationen.

**11.** Zweites Kommunikationsgerät (B) zur Verwendung in einem drahtlosen Kommunikationssystem, das mit einem ersten Kommunikationsgerät (10) und dem zweiten Kommunikationsgerät (20) konfiguriert ist, um mit dem ersten Kommunikationsgerät (A) zu kommunizieren, wobei das zweite Kommunikationsgerät eine Schaltung umfasst, die für Folgendes konfiguriert ist:

- Teilnehmen am Strahlformungstraining mit dem ersten Kommunikationsgerät, um eine Vielzahl von Antennenstrahlkombinationen von Antennenstrahlen zu trainieren, die von dem ersten Kommunikationsgerät zum Senden und/oder Empfangen von Signalen verwendet werden,
- Empfangen von Auswahlinformationen, die eine oder mehrere der trainierten Antennenstrahlkombinationen angeben, die gemäß einem Sicherheitskriterium ausgewählt wurden, das darauf ausgerichtet ist, die Wahrscheinlichkeit zu minimieren, dass ein drittes Kommunikationsgerät die Kommunikation zwischen dem ersten Kommunikationsgerät und dem zweiten Kommunikationsgerät abhören kann, und
- Kommunizieren mit dem ersten Kommunikationsgerät über die ausgewählte(n) Antennenstrahlkombination(en).

**12.** Zweites Kommunikationsgerät (B) nach Anspruch 11, wobei die Schaltung für Folgendes konfiguriert ist:

- Durchführen von Strahlformungstraining mit dem ersten Kommunikationsgerät, um eine Vielzahl von Antennenstrahlkombinationen von Antennenstrahlen zu trainieren, die von dem ersten Kommunikationsgerät zum Senden und/oder Empfangen von Signalen verwendet werden, und
- Rückmelden der Strahlqualität an das erste Kommunikationsgerät.

**13.** Erstes Kommunikationsverfahren eines ersten Kommunikationsgeräts (A) zur Verwendung in einem drahtlosen Kommunikationssystem, das mit dem ersten Kommunikationsgerät (10) und einem zweiten Kommunikationsgerät (20) konfiguriert ist, um mit dem zweiten Kommunikationsgerät (B) zu kommunizieren, wobei das erste Kommunikationsverfahren Folgendes umfasst:

- Durchführen von Strahlformungstraining mit dem zweiten Kommunikationsgerät, um eine Vielzahl von Antennenstrahlkombinationen von Antennenstrahlen zu trainieren, die von dem ersten und zweiten Kommunikationsgerät zum Senden und/oder Empfangen von Signalen verwendet werden,
- Auswählen einer oder mehrerer der trainierten Antennenstrahlkombinationen, und
- Kommunizieren mit dem zweiten Kommunikationsgerät unter Verwendung der ausgewählten einen oder mehreren Antennenstrahlkombinationen,

wobei die eine oder mehrere der trainierten Antennenstrahlkombinationen nach einem Sicherheitskriterium ausgewählt werden, das darauf ausgerichtet ist, die Wahrscheinlichkeit zu verringern, dass ein drittes Kommunikationsgerät (E) die Kommunikation zwischen dem ersten Kommunikationsgerät und dem zweiten Kommunikationsgerät abhören kann.

**14.** Kommunikationsverfahren eines zweiten Kommunikationsgeräts (B) zur Verwendung in einem drahtlosen Kommunikationssystem, das mit einem ersten Kommunikationsgerät (10) und dem zweiten Kommunikationsgerät (20) konfiguriert ist, um mit dem ersten Kommunikationsgerät (A) zu kommunizieren, wobei das Kommunikationsverfahren Folgendes umfasst:

- Teilnehmen am Strahlformungstraining mit dem ersten Kommunikationsgerät, um eine Vielzahl von Antennenstrahlkombinationen von Antennenstrahlen zu trainieren, die von dem ersten Kommunikationsgerät zum Senden und/oder Empfangen von Signalen verwendet werden,
- Empfangen von Auswahlinformationen, die eine oder mehrere der trainierten Antennenstrahlkombinationen angeben, die gemäß einem Sicherheitskriterium ausgewählt wurden, das darauf ausgerichtet ist, die Wahrscheinlichkeit zu verringern, dass ein drittes Kommunikationsgerät (E) die Kommunikation zwischen dem ersten Kommunikationsgerät und dem zweiten Kommunikationsgerät abhören kann, und
- Kommunizieren mit dem ersten Kommunikationsgerät unter Verwendung der ausgewählten einen oder mehreren Antennenstrahlkombinationen.

15. Computerprogramm mit Programmcodemitteln, die einen Computer veranlassen, die Schritte des Verfahrens nach Anspruch 13 oder 14 durchzuführen, wenn das Computerprogramm auf einem Computer ausgeführt wird.

**Revendications**

1. Premier dispositif de communication (A) destiné à être utilisé dans un système de communication sans fil configuré avec le premier dispositif de communication (10) et un deuxième dispositif de communication (20) pour communiquer avec le deuxième dispositif de communication (B), le premier dispositif de communication comprenant des circuits configurés pour

   - réaliser un apprentissage de formation de faisceaux avec le deuxième dispositif de communication pour former une pluralité de combinaisons de faisceaux d'antenne utilisées par les premier et deuxième dispositifs de communication pour émettre et/ou recevoir des signaux,
   - sélectionner une ou plusieurs des combinaisons de faisceaux d'antenne formées, et
   - communiquer avec le deuxième dispositif de communication à l'aide des une ou plusieurs combinaisons de faisceaux d'antenne sélectionnées,
   moyennant quoi
   les circuits sont configurés pour sélectionner les une ou plusieurs des combinaisons de faisceaux d'antenne formées conformément à un critère de sécurité visant à réduire la probabilité qu'un troisième dispositif de communication (E) puisse écouter la communication entre le premier dispositif de communication et le deuxième dispositif de communication.

2. Premier dispositif de communication (A) selon la revendication 1, dans lequel les circuits sont configurés pour sélectionner une ou plusieurs des combinaisons de faisceaux d'antenne formées qui optimisent le critère de sécurité, notamment en maximisant un taux de secret et/ou en maximisant la probabilité d'erreurs de transmission au niveau du troisième dispositif de communication.

3. Premier dispositif de communication (A) selon la revendication 1 ou 2, dans lequel les circuits sont configurés pour sélectionner une pluralité des combinaisons de faisceaux d'antenne formées dans lequel

   i) les circuits sont configurés pour les utiliser simultanément pour communiquer avec le deuxième dispositif de communication et/ou
   ii) les circuits sont configurés pour les utiliser dans différentes dimensions orthogonales pour communiquer avec le deuxième dispositif de communication, et/ou
   iii) les combinaisons de faisceaux d'antenne formées utilisent des chemins de communication différents entre les premier et deuxième dispositifs de communication, et/ou
   iv) les circuits sont configurés pour diviser un message à transmettre au deuxième dispositif de communication en une pluralité de parties de message et transmettre les parties de message sur différents faisceaux d'antenne ou différents ensembles de faisceaux d'antenne des combinaisons de faisceaux d'antenne sélectionnées.

4. Premier dispositif de communication (A) selon l'une quelconque des revendications précédentes, dans lequel les circuits sont configurés pour transmettre des informations de sélection au deuxième dispositif de communication, les informations de sélection indiquant les une ou plusieurs combinaisons de faisceaux d'antenne sélectionnées et l'ordre de leur utilisation, et/ou transmettre une ou plusieurs parties de message qui sont transmises à une ou plusieurs instances du deuxième dispositif de communication à l'aide d'un ou plusieurs faisceaux d'antenne ayant un largeur de faisceau minimale requise et/ou une puissance d'émission minimale requise.

5. Premier dispositif de communication (A) selon l'une quelconque des revendications précédentes, dans lequel les circuits sont configurés pour réaliser une formation de faisceaux paraboliques linéaires ou non linéaires à déphasage pour communiquer avec le deuxième dispositif de communication afin de commander le point focal des un ou plusieurs faisceaux d'antenne sur la position du deuxième dispositif de communication ou commander les un ou plusieurs faisceaux d'antenne dans une seule direction.

6. Premier dispositif de communication (A) selon l'une quelconque des revendications précédentes, dans lequel les circuits sont configurés pour diviser un message à transmettre au deuxième dispositif de communication en une pluralité de parties de message, former deux combinaisons différentes des parties de message ou plus et transmettre les deux combinaisons différentes des parties de message ou plus dans différentes dimensions orthogonales et/ou sur différents faisceaux d'antenne des combinaisons de faisceaux d'antenne sélectionnées.

7. Premier dispositif de communication (A) selon l'une quelconque des revendications précédentes, dans lequel les circuits sont configurés pour moduler des signaux à transmettre sur des signaux à valeurs complexes modulés, chacun ayant une composante en phase et une composante en quadrature de phase et transmettre ces composantes d'un signal modulé dans différentes dimensions orthogonales et/ou sur différents faisceaux d'antenne des combinaisons de faisceaux d'antenne sélectionnées.

8. Premier dispositif de communication (A) selon l'une quelconque des revendications précédentes, dans lequel les circuits sont configurés pour transmettre des signaux de bruit à l'aide d'un ou plusieurs faisceaux d'antenne de combinaisons de faisceaux d'antenne non sélectionnées pour la communication entre le premier dispositif de communication et le deuxième dispositif de communication, en particulier changer de manière récurrente les un ou plusieurs faisceaux d'antenne utilisés pour transmettre les signaux de bruit et/ou commander la puissance d'émission et/ou des paramètres de faisceau des un ou plusieurs faisceaux d'antenne utilisés pour transmettre les signaux de bruit de telle sorte qu'un brouillage au niveau du deuxième dispositif de communication soit minimisé et/ou qu'un rapport signal/brouillage plus bruit au niveau du deuxième dispositif de communication soit maximisé et/ou transmettre les signaux de bruit tout en transmettant ou en recevant simultanément des messages à l'aide d'un ou plusieurs faisceaux d'antenne des combinaisons de faisceaux d'antenne sélectionnées pour la communication entre le premier dispositif de communication et le deuxième dispositif de communication.

9. Premier dispositif de communication (A) selon l'une quelconque des revendications précédentes, dans lequel le deuxième dispositif de communication comprend deux antennes distribuées ou plus, et
dans lequel les circuits sont configurés pour recevoir des informations de position indiquant la position des deux antennes distribuées ou plus du deuxième dispositif de communication et transmettre des parties de message d'un message aux deux antennes distribuées ou plus à l'aide de différents faisceaux d'antenne des configurations de faisceau d'antenne sélectionnées et/ou transmettre un message aux une ou plusieurs des antennes distribuées du deuxième dispositif de communication présentant une distance minimale par rapport au premier dispositif de communication.

10. Premier dispositif de communication (A) selon l'une quelconque des revendications précédentes, dans lequel les circuits sont configurés pour transmettre des signaux à l'aide de faisceaux sélectionnés pour la transmission en utilisant des informations de position absolue et/ou relative fournies sur la position des une ou plusieurs instances du deuxième dispositif de communication et/ou de ses antennes distribuées

    - à partir d'un ou plusieurs d'une base de données, d'un capteur de position et d'un capteur radar, et/ou
    - en évaluant des plans de masse, informations géométriques, informations de distance, informations de canaux, informations d'heure de vol et/ou mesures angulaires de communications antérieures, et/ou
    - par estimation à l'estime et/ou
    - en construisant un modèle statistique basé sur des informations historiques.

11. Deuxième dispositif de communication (B) destiné à être utilisé dans un système de communication sans fil configuré avec un premier dispositif de communication (10) et un deuxième dispositif de communication (20) pour communiquer avec le premier dispositif de communication (A), le deuxième dispositif de communication comprenant des circuits configurés pour

    - participer à un apprentissage de formation de faisceaux avec le premier dispositif de communication pour former une pluralité de combinaisons de faisceaux d'antenne utilisées par le premier dispositif de communication pour émettre et/ou recevoir des signaux,
    - recevoir des informations de sélection indiquant une ou plusieurs des combinaisons de faisceaux d'antenne formées sélectionnées conformément à un critère de sécurité visant à minimiser la probabilité qu'un troisième dispositif de communication puisse écouter la communication entre le premier dispositif de communication et le deuxième dispositif de communication ; et

- communiquer avec le premier dispositif de communication à l'aide des une ou plusieurs combinaisons de faisceaux d'antenne sélectionnées.

**12.** Deuxième dispositif de communication (B) selon la revendication 11, dans lequel les circuits sont configurés pour

- réaliser un apprentissage de formation de faisceaux avec le premier dispositif de communication pour former une pluralité de combinaisons de faisceaux d'antenne de faisceaux d'antenne utilisés par le premier dispositif de communication pour transmettre et/ou recevoir des signaux et
- renvoyer des informations de qualité de faisceau au premier dispositif de communication.

**13.** Procédé de communication d'un premier dispositif de communication (A) destiné à être utilisé dans un système de communication sans fil configuré avec le premier dispositif de communication (10) et un deuxième dispositif de communication (20) pour communiquer avec le deuxième dispositif de communication (B), le procédé de communication comprenant

- la réalisation d'un apprentissage de formation de faisceaux avec le deuxième dispositif de communication pour former une pluralité de combinaisons de faisceaux d'antenne utilisées par les premier et deuxième dispositifs de communication pour émettre et/ou recevoir des signaux,
- sélectionner une ou plusieurs combinaisons de faisceaux d'antenne formées, et
- communiquer avec le deuxième dispositif de communication à l'aide des une ou plusieurs combinaisons de faisceaux d'antenne sélectionnées,
moyennant quoi
les une ou plusieurs des combinaisons de faisceaux d'antenne formées sont sélectionnées conformément à un critère de sécurité visant à réduire la probabilité qu'un troisième dispositif de communication (E) puisse écouter la communication entre le premier dispositif de communication et le deuxième dispositif de communication.

**14.** Procédé de communication d'un deuxième dispositif de communication (B) destiné à être utilisé dans un système de communication sans fil configuré avec un premier dispositif de communication (10) et un deuxième dispositif de communication (20?) pour communiquer avec le premier dispositif de communication (A),
le procédé de communication comprenant

- la participation à un apprentissage de formation de faisceaux avec le premier dispositif de communication pour former une pluralité de combinaisons de faisceaux d'antenne utilisées par le premier dispositif de communication pour émettre et/ou recevoir des signaux,
- la réception d'informations de sélection indiquant une ou plusieurs des combinaisons de faisceaux d'antenne formées sélectionnées conformément à un critère de sécurité visant à minimiser la probabilité qu'un troisième dispositif de communication puisse écouter la communication entre le premier dispositif de communication et le deuxième dispositif de communication ; et
- la communication avec le premier dispositif de communication à l'aide des une ou plusieurs combinaisons de faisceaux d'antenne sélectionnées.

**15.** Programme d'ordinateur comprenant des moyens de code de programme pour amener un ordinateur à réaliser les étapes dudit procédé selon la revendication 13 ou 14 lorsque ledit programme d'ordinateur est exécuté sur un ordinateur.

19

**Fig. 1**

**Fig. 2**

**Fig. 3**

**Fig. 4A**

**Fig. 4B**

**Fig. 5A**

**Fig. 5B**

**Fig. 6A**

**Fig. 6B**

**Fig. 7**

Fig. 8

Fig. 9

Fig. 10

**Fig. 11**

**Fig. 12**

EP 4 011 053 B1

**EP 4 011 053 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018078124 A1
- EP 3427400 B1